# EUROPEAN PATENT APPLICATION

(11) **EP 4 800 626 A1**
(43) Date of publication of application: **02.09.2026**
(21) Application number: 26161115.6
(22) Date of filing: 26.02.2026
(51) Int. Cl.: G06Q 20/20, G07G 1/00, G07G 1/14

(54) **RELAY DEVICE FOR POS SYSTEM, POS SYSTEM, AND CONTROL METHOD FOR POS SYSTEM**

(30) Priority: 28.02.2025 JP 2025032089
(71) Applicant: Seiko Epson Corporation, Tokyo 160-8801 (JP)
(72) Inventor: YOSHIZAWA, Junichi, Suwa-shi, 392-8502 (JP); FUKAZAWA, Hiroyasu, Suwa-shi, 392-8502 (JP); SHIMODA, Kazunori, Suwa-shi, 392-8502 (JP); WADA, Harutoshi, Suwa-shi, 392-8502 (JP); HASHIMOTO, Koji, Suwa-shi, 392-8502 (JP); MURAYAMA, Hiroki, Suwa-shi, 392-8502 (JP); TANIGUCHI, Takaaki, Suwa-shi, 392-8502 (JP)
(74) Representative: Lewis Silkin LLP

(57) **Abstract**

A relay device can be connected to at least one peripheral device related to an accounting process. Upon receiving a control request to the peripheral device from a first terminal device configured to accept input related to the accounting process, the control unit can control the peripheral device with the first terminal device as a control entity. Upon receiving a control request to the peripheral device from a second terminal device configured to accept input related to the accounting process after the control according to the control request to the peripheral device from the first terminal device is completed, the control unit can control the peripheral device with the second terminal device as a control entity.

## Description

The present application is based on, and claims priority from JP Application Serial Number 2025-032089, filed February 28, 2025, the disclosure of which is hereby incorporated by reference herein in its entirety.

### BACKGROUND

### 1. Technical Field

The present disclosure relates to a relay device for POS system, a POS system, a control method for POS system, and a program.

### 2. Related Art

For example, JP-A-2015-194800 discloses a POS system for performing an accounting process using a terminal device. Such a POS system performs communication between the terminal device and various peripheral devices to cause the various peripheral devices to perform the accounting process.

JP-A-2015-194800 is an example of the related art.

However, in such a POS system, it is desired to improve convenience related to accounting process.

### SUMMARY

A relay device for POS system for solving the above-described problem is a relay device for POS system for being connected to at least one peripheral device related to an accounting process, the relay device including: a control unit. The control unit is configured to, upon receiving a control request to the peripheral device from a first terminal device configured to accept input related to the accounting process, control the peripheral device with the first terminal device as a control entity. The control unit is configured to, upon receiving a control request to the peripheral device from a second terminal device configured to accept input related to the accounting process after control according to the control request from the first terminal device to the peripheral device is completed, control the peripheral device with the second terminal device as a control entity.

A POS system for solving the above-described problem is a POS system including: at least one peripheral device related to an accounting process; and a relay device. The peripheral device and the relay device are configured to be connected to each other. The relay device is configured to, upon receiving a control request to the peripheral device from a first terminal device configured to accept input related to the accounting process, control the peripheral device with the first terminal device as a control entity. The relay device is configured to, upon receiving a control request to the peripheral device from a second terminal device configured to accept input related to the accounting process after control according to the control request from the first terminal device to the peripheral device is completed, control the peripheral device with the second terminal device as a control entity.

A control method for POS system for solving the above-described problem is a control method for POS system including: at least one peripheral device related to an accounting process; and a relay device. The peripheral device and the relay device are configured to be connected to each other. The control method for POS system includes, by the relay device: upon receiving a control request to the peripheral device from a first terminal device configured to accept input related to the accounting process, controlling the peripheral device with the first terminal device as a control entity; and upon receiving a control request to the peripheral device from a second terminal device configured to accept input related to the accounting process after control according to the control request from the first terminal device to the peripheral device is completed, controlling the peripheral device with the second terminal device as a control entity.

A program for solving the above-described problem is for causing at least one computer to execute: upon receiving a control request to a peripheral device related to an accounting process from a first terminal device configured to accept input related to the accounting process, controlling the peripheral device with the first terminal device as a control entity; and upon receiving a control request to the peripheral device from a second terminal device configured to accept input related to the accounting process after control according to the control request from the first terminal device to the peripheral device is completed, controlling the peripheral device with the second terminal device as a control entity.

### BRIEF DESCRIPTION OF THE DRAWINGS

FIG. 1 is a schematic diagram illustrating a POS system according to a first embodiment.
FIG. 2 is a schematic diagram illustrating functions of the POS system according to the first embodiment.
FIG. 3 is a flowchart illustrating an activation control process according to the first embodiment.
FIG. 4 is a flowchart illustrating a peripheral device identification process according to the first embodiment.
FIG. 5 is a flowchart illustrating an accounting control process according to the first embodiment.
FIG. 6 is a flowchart illustrating the accounting control process according to the first embodiment.
FIG. 7 is a flowchart illustrating the accounting control process according to the first embodiment.
FIG. 8 is a flowchart illustrating the accounting control process according to the first embodiment.
FIG. 9 is a flowchart illustrating the accounting control process according to the first embodiment.
FIG. 10 is a flowchart illustrating the accounting control process according to the first embodiment.
FIG. 11 is a schematic diagram illustrating functions of a POS system according to a second embodiment.
FIG. 12 is a schematic diagram illustrating functions of a POS system according to a third embodiment.
FIG. 13 is a schematic diagram illustrating a POS system according to a fourth embodiment.
FIG. 14 is a flowchart illustrating an accounting control process according to the fourth embodiment.
FIG. 15 is a flowchart illustrating the accounting control process according to the fourth embodiment.

### DESCRIPTION OF EMBODIMENTS

### First Embodiment

Hereinafter, an embodiment of a relay device for POS system, a POS system, a control method for POS system, and a program will be described.

### Configuration of POS System 11

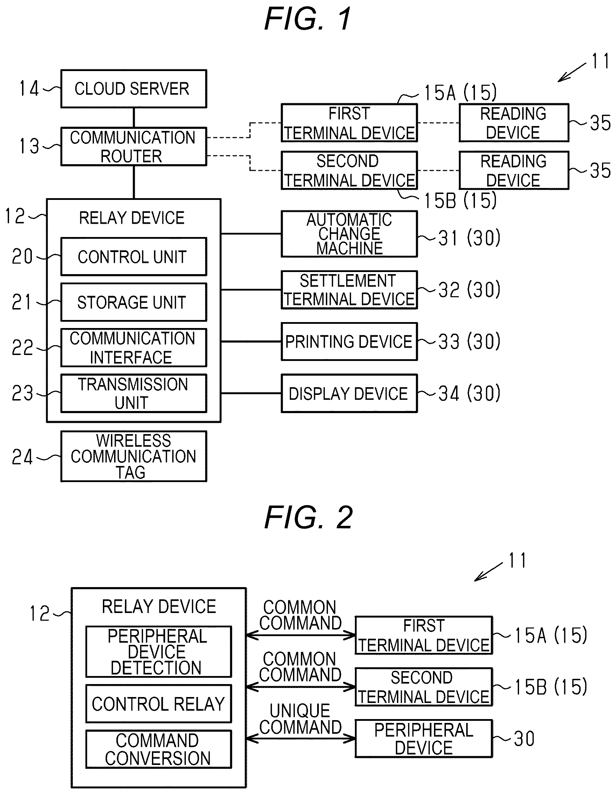

As illustrated in FIG. 1, a Point of Sale (POS) system 11 is configured to manage point-of-sale information. The POS system 11 is configured to cause at least one peripheral device 30 to perform an accounting process using a plurality of terminal devices 15.

The POS system 11 may include a plurality of terminal devices 15. The plurality of terminal devices 15 may include a first terminal device 15A and a second terminal device 15B. That is, the POS system 11 may include the first terminal device 15A and the second terminal device 15B. Hereinafter, one terminal device 15 may be described as a representative.

The terminal device 15 is a device that allows an operator to perform input related to the accounting process. The terminal device 15 is a device for receiving input by a store clerk, but may be, for example, a device for receiving input by a purchaser of a commodity. The terminal device 15 is a portable terminal device, but is not limited thereto, and may be a device that is not easy to carry. The terminal device 15 may be, for example, a portable tablet terminal device.

The terminal device 15 is installed with an operating system and an application. The operating system may be any operating system. The application may be software compatible with the installed operating system. The application is developed by a software development kit (SDK) so as to be compatible with the operating system. The application is a POS application for using the POS system 11.

The terminal device 15 can control the peripheral device 30 using a common command. The common command is generated in the same manner regardless of the operating system and the application installed in the terminal device 15.

As a specific example, a first terminal device 15A and a second terminal device 15B generate common commands in the same manner even if the installed operating systems and applications are different.

The POS system 11 may include a reading device 35. The POS system 11 may include a plurality of reading devices 35. The reading device 35 is configured to read information on a commodity. The reading device 35 reads a commodity identifier for identifying the commodity. The reading device 35 may read various codes for identifying the commodity. The reading device 35 may be a barcode reader for reading a barcode for identifying the commodity.

The reading device 35 can communicate with the terminal device 15. The reading device 35 performs wireless communication with the terminal device 15, but may perform wired communication. The reading device 35 may perform near field communication with the terminal device 15. The reading device 35 may communicate with the terminal device 15 via Bluetooth (trademark registered). The reading device 35 may be provided in the terminal device 15.

The POS system 11 includes at least one peripheral device 30. The POS system 11 may include a plurality of peripheral devices 30. The At least one peripheral device 30 may include a device classified into any of a plurality of categories. Specifically, the at least one peripheral device 30 may include at least any one of an automatic change machine 31, a settlement terminal device 32, a printing device 33, and a display device 34. The plurality of categories may be any of the automatic change machine 31, the settlement terminal device 32, the printing device 33, and the display device 34.

The automatic change machine 31 is configured to perform cash settlement. The automatic change machine 31 allows cash to be inserted. The automatic change machine 31 performs settlement when cash is inserted. The automatic change machine 31 is configured to discharge cash for change after settlement.

The settlement terminal device 32 is a device for performing settlement for accounting. The settlement terminal device 32 is a device for performing electronic settlement. The settlement terminal device 32 may be a device for performing electronic settlement by any settlement method. The settlement terminal device 32 may be a device for performing credit card settlement. The settlement terminal device 32 may be a device for performing code settlement.

The printing device 33 is configured to perform printing related to accounting. The printing device 33 may be configured to print a receipt related to accounting. The printing device 33 may be configured to print a service coupon related to accounting. The printing device 33 may use any printing method. The printing device 33 performs printing by a thermal method, but may perform printing by any printing method.

The display device 34 is configured to perform display related to the accounting process. The display device 34 may be configured to display a subtotal in the accounting process. The display device 34 may be configured to perform settlement display in the accounting process. The display device 34 may be a customer display.

As described above, the peripheral device 30 is a device related to the accounting process and is classified by category. The plurality of peripheral devices 30 may be devices manufactured by different manufacturers or may be devices manufactured by the same manufacturer.

The plurality of peripheral devices 30 have different commands when communicating with the terminal device 15, but may have the same command. In this way, the plurality of peripheral devices 30 may be controlled by unique commands. That is, the plurality of peripheral devices 30 may have different unique commands.

The POS system 11 includes a relay device 12. That is, the relay device 12 is the relay device 12 of the POS system 11. The POS system 11 may include a communication router 13.

The relay device 12 can be connected to at least one peripheral device 30. The relay device 12 can be connected to a plurality of peripheral devices 30. The relay device 12 may perform serial communication with a plurality of peripheral devices 30. The relay device 12 may be capable of communicating with a plurality of peripheral devices 30 via a universal serial bus (USB). The relay device 12 may perform parallel communication with a plurality of peripheral devices 30.

The relay device 12 includes a control unit 20, a storage unit 21, and a communication interface 22. The control unit 20 controls the relay device 12. The control unit 20 may be at least one computer for executing various processes according to a computer program. The control unit 20 may include one or more processors that execute various processes according to a computer program.

The control unit 20 may include one or more dedicated hardware circuits. The control unit 20 may include an application specific integrated circuit that executes at least some of the various kinds of processing. The control unit 20 may include a circuit including a combination of a processor and a hardware circuit. The processor includes a CPU and memories such as a RAM and a ROM. The memories store program codes or commands configured to cause the CPU to execute processing. A memory, that is, a computer-readable medium includes all readable media that can be accessed by a general-purpose or dedicated computer.

The storage unit 21 may store a program executed by the control unit 20. The storage unit 21 stores data set by the control unit 20. The storage unit 21 may include a hard disk, a flash memory, or the like. The storage unit 21 may include a RAM. The storage unit 21 may be provided in the control unit 20. The communication interface 22 is an interface for communicating with an external device.

The relay device 12 includes a transmission unit 23. The transmission unit 23 may be incorporated in the relay device 12. The transmission unit 23 is configured to transmit a communication identifier that enables communication with the relay device 12. The communication identifier is an identifier for communicating with the relay device 12 as a communication target. The transmission unit 23 may be configured to transmit a beacon identifier including a communication identifier.

The POS system 11 includes a near field communication tag 24. In the drawing, the near field communication tag 24 is referred to as a wireless communication tag. The near field communication tag 24 may be included in the relay device 12, may be incorporated in the relay device 12, or may be attached to the exterior of the relay device 12. The near field communication tag 24 may be disposed near the relay device 12.

The near field communication tag 24 is a tag for performing wireless communication with a communication identifier that enables communication with the relay device 12. The near field communication tag 24 is a tag for performing near field communication. The near field communication tag 24 may be a near field communication (NFC) tag.

The relay device 12 can communicate with the terminal device 15 via the communication router 13. The relay device 12 can communicate with a cloud server 14 to be described later via the communication router 13.

The communication router 13 is arranged near the relay device 12 separately from the relay device 12, but may be incorporated in the relay device 12. The communication router 13 is communicably connected to the relay device 12.

The communication router 13 is a router capable of both wired communication and wireless communication, but may be a router capable of either wired communication or wireless communication. The communication router 13 is connected to the relay device 12 in a manner enabling wired communication, but may be connected to the relay device 12 in a manner enabling wireless communication.

The communication router 13 performs wireless communication with the terminal device 15, but may perform wired communication with the terminal device 15. The communication router 13 performs wired communication with the cloud server 14, but may perform wireless communication with the cloud server 14.

In this way, the relay device 12 can communicate with the first terminal device 15A and the second terminal device 15B via wireless communication. Hereinafter, regarding the communication via the communication router 13, the description of the communication router 13 will be omitted.

The POS system 11 may include the cloud server 14. The cloud server 14 is a server for managing commodity data. In particular, as the commodity data, the cloud server 14 manages at least a commodity identifier, a commodity name, and a price in association. The cloud server 14 may be a server for managing data related to an accounting process. The cloud server 14 may be a server for managing data related to the specifications of the peripheral device 30.

The cloud server 14, the terminal device 15, and the peripheral device 30 are configured in the same manner as the relay device 12. The cloud server 14, the terminal device 15, and the peripheral device 30 have the same configuration as the control unit 20, the storage unit 21, and the communication interface 22 of the relay device 12. Hereinafter, the control contents of the cloud server 14, the terminal device 15, and the peripheral device 30 will be described as the cloud server 14, the terminal device 15, and the peripheral device 30 while omitting a detailed description of the control entity.

### Functions of POS System 11

As illustrated in FIG. 2, in the POS system 11, the relay device 12 has various functions. The relay device 12 may have a function of detecting the peripheral device 30. The relay device 12 detects a connected peripheral device 30. The relay device 12 acquires a peripheral device identifier of the peripheral device 30 whose connection has been detected. The peripheral device identifier is data for identifying the peripheral device 30. Specifically, the peripheral device identifier is data for identifying the category of the peripheral device 30 and the type of the peripheral device 30.

The relay device 12 has a function of control relay between the terminal device 15 and the peripheral device 30. In particular, the control relay function includes a function of relaying communication data between the plurality of terminal devices 15 and the plurality of peripheral devices 30. The control relay mechanism may process and relay the communication data or simply relay the communication data without processing the communication data. Specifically, the relay device 12 performs control to allow communication with the terminal device 15. The relay device 12 functions as a switching hub with the peripheral device 30. The relay device 12 performs exclusive control on the plurality of peripheral devices 30. The relay device 12 performs control to allow communication with the cloud server 14.

In particular, the relay device 12 can be connected to a plurality of peripheral devices 30 classified into the same category. The relay device 12 can be connected to any one of the plurality of peripheral devices 30 classified into the same category.

The relay device 12 has a function of data conversion between the terminal device 15 and the peripheral device 30. The relay device 12 performs communication with the terminal device 15 using a common command. The relay device 12 performs communication with the peripheral device 30 using a unique command.

The storage unit 21 may store a conversion table. The conversion table is data for converting the unique command and the common command corresponding to the peripheral device identifier of the peripheral device 30. The control unit 20 refers to the conversion table and performs conversion between the common command and the unique command.

Upon receiving the common command from the terminal device 15, the relay device 12 converts the received common command into a unique command of the peripheral device 30 as the communication target. The relay device 12 transmits the converted unique command to the peripheral device 30 as the communication target.

Upon receiving the unique command from the peripheral device 30, the relay device 12 converts the received unique command into a common command. The relay device 12 transmits the converted common command to the terminal device 15 as the communication target.

### Activation Control Process

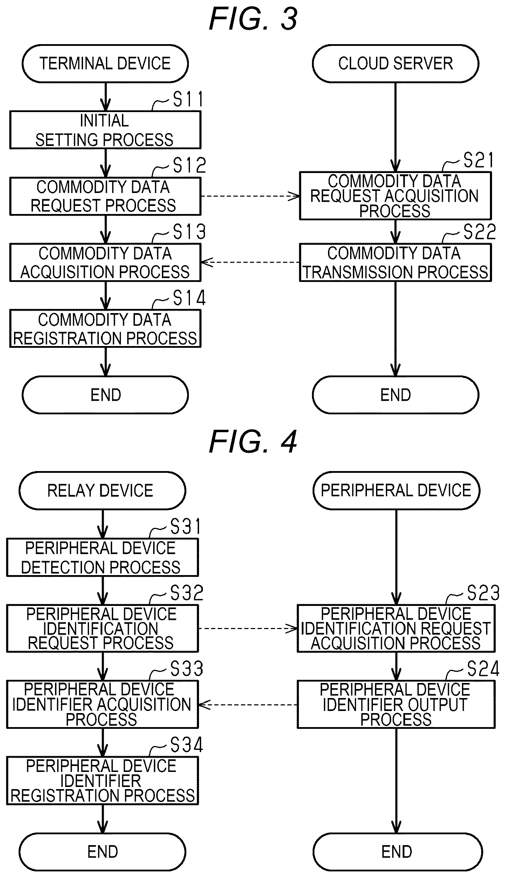

The activation control process will be described with reference to FIG. 3. The activation control process is a process executed by the terminal device 15 when the application of the terminal device 15 is activated.

As illustrated in FIG. 3, in step S11, the terminal device 15 executes an initial setting process. In this process, the terminal device 15 performs initial setting for using the application.

In step S12, the terminal device 15 executes a commodity data request process. In this process, the terminal device 15 transmits a commodity data request to the cloud server 14. The commodity data request is a request for acquiring the latest commodity data. The commodity data may include a commodity identifier, a commodity name, and a price.

In step S21, the cloud server 14 executes a commodity data request acquisition process. In this process, the cloud server 14 receives the commodity data request from the terminal device 15.

In step S22, the cloud server 14 executes a commodity data transmission process. In this process, the cloud server 14 transmits the latest registered commodity data to the terminal device 15 that has transmitted the commodity data request.

In step S13, the terminal device 15 executes a commodity data acquisition process. In this process, the terminal device 15 receives the commodity data transmitted from the cloud server 14. Accordingly, the terminal device 15 acquires the commodity data.

In step S14, the terminal device 15 executes a commodity data registration process. In this process, the terminal device 15 registers the acquired commodity data in the memory. Accordingly, the terminal device 15 can perform control based on the latest commodity data.

### Peripheral Device Identification Process

The peripheral device identification process will be described with reference to FIG. 4. The peripheral device identification process is a process executed by the control unit 20 when the peripheral device 30 is electrically connected to the relay device 12.

As illustrated in FIG. 4, in step S31, the control unit 20 executes a peripheral device detection process. In this process, the control unit 20 detects that the peripheral device 30 is connected to the relay device 12. The control unit 20 recognizes the connection port at which the peripheral device 30 is connected to the relay device 12.

In step S32, the control unit 20 executes a peripheral device identification request process. In this process, the control unit 20 outputs a peripheral device identification request to the connected peripheral device 30. The peripheral device identification request is a request for acquiring the peripheral device identifier.

In step S23, the peripheral device 30 executes a peripheral device identification request acquisition process. In this process, the peripheral device 30 receives the peripheral device identification request transmitted from the relay device 12. Thereby, the peripheral device 30 acquires the peripheral device identification request.

In step S24, the peripheral device 30 executes a peripheral device identifier output process. In this process, the peripheral device 30 outputs the peripheral device identifier to the relay device 12. The peripheral device identifier is registered in the memory of the peripheral device 30.

In step S33, the control unit 20 executes a peripheral device identifier acquisition process. In this process, the control unit 20 receives the peripheral device identifier from the connected peripheral device 30. Accordingly, the control unit 20 acquires the peripheral device identifier of the connected peripheral device 30.

In step S34, the control unit 20 executes a peripheral device identifier registration process. In this process, the control unit 20 registers the acquired peripheral device identifier in the storage unit 21. In particular, the control unit 20 registers the connection port at which the peripheral device 30 is connected to the relay device 12 and the peripheral device identifier in the storage unit 21 in association with each other. Accordingly, the control unit 20 can identify the acquired peripheral device 30.

### Accounting Control Process

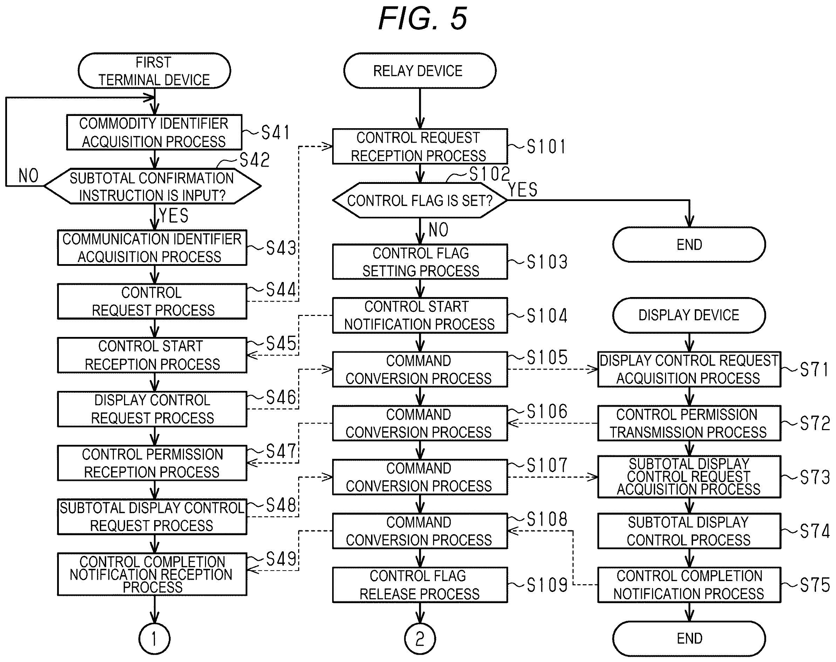

Here, a specific example of the accounting control process will be described with reference to FIGS. 5 to 10. The accounting control process is a control process for performing an accounting process. The accounting control process is a process executed by the POS system 11. In particular, the accounting control process is executed in the terminal device 15, the relay device 12, and the peripheral device 30.

As illustrated in FIG. 5, in step S41, the first terminal device 15A executes a commodity identifier acquisition process. In this process, when a reading instruction is input, the first terminal device 15A performs control to enable reading by the reading device 35. Upon acquiring the commodity identifier from the reading device 35, the first terminal device 15A collates the commodity identifier with the commodity data registered in the memory. Accordingly, the first terminal device 15A acquires the commodity name and the price corresponding to the commodity identifier. The first terminal device 15A calculates a subtotal result of the price corresponding to the commodity identifier.

In step S42, the first terminal device 15A determines whether a subtotal confirmation instruction is input by the operator. If it is determined that no subtotal confirmation instruction is input, the first terminal device 15A proceeds to step S41. If it is determined that a subtotal confirmation instruction is input, the first terminal device 15A proceeds to step S43. As described above, until a subtotal confirmation instruction is input, the first terminal device 15A executes step S41, acquires the commodity identifier, and calculates the subtotal result.

In step S43, the first terminal device 15A executes a communication identifier acquisition process. In this process, the first terminal device 15A acquires the communication identifier by receiving the beacon identifier from the transmission unit 23 by wireless communication. The first terminal device 15A may acquire the communication identifier by wireless communication with the near field communication tag 24.

The communication identifier is an identifier corresponding to the relay device 12. The communication identifier is an identifier for identifying the relay device 12 as a communication target. The first terminal device 15A registers the acquired communication identifier in the memory. Accordingly, the first terminal device 15A can recognize the relay device 12 as a communication target related to the accounting process.

In step S44, the first terminal device 15A executes a control request process. In this process, the first terminal device 15A transmits a control request for the peripheral device 30 to the relay device 12 as a communication target. The control request is a control entity of the peripheral device 30 connected to the relay device 12, and is a request to control the peripheral device 30 in response to the control request.

In the relay device 12, in step S101, the control unit 20 executes a control request reception process. In this process, the control unit 20 receives the control request from the first terminal device 15A. Accordingly, the control unit 20 acquires the control request from the first terminal device 15A.

In step S102, the control unit 20 determines whether a control flag is set. The control flag may be assigned to the storage unit 21. The control flag is a flag indicating whether to allow control on the peripheral device 30.

Specifically, if a control flag is set, one terminal device 15 is allowed to control the peripheral device 30, and the other terminal devices 15 are not allowed to control the peripheral device 30. If the control flag is released, no terminal devices 15 are allowed to control the peripheral device 30, and any one of the terminal devices 15 can be allowed to control the peripheral device 30.

If it is determined that a control flag is set, the control unit 20 ends the accounting control process. Accordingly, the control request from the first terminal device 15A is invalidated. That is, the control of the peripheral device 30 according to the control request from the first terminal device 15A is restricted. If it is determined that no control flag is set, the control unit 20 proceeds to step S103.

In step S103, the control unit 20 executes a control flag setting process. In this process, the control unit 20 sets a control flag. Accordingly, the control unit 20 invalidates control requests from the terminal devices 15 other than the first terminal device 15A.

In step S104, the control unit 20 executes a control start notification process. In this process, the control unit 20 transmits a control start notification indicating that control according to the control request can be started to the first terminal device 15A that has transmitted the control request.

In step S45, the first terminal device 15A executes a control start notification reception process. In this process, the first terminal device 15A receives the control start notification from the relay device 12. Accordingly, the first terminal device 15A can recognize that the control according to the control request can be started. In this way, the first terminal device 15A communicates with the relay device 12 based on the communication identifier.

In step S46, the first terminal device 15A executes a display control request process. In this process, the first terminal device 15A transmits a common command indicating a display control request to the relay device 12. The display control request is a request for controlling the display device 34 connected to the relay device 12.

In the relay device 12, in step S105, the control unit 20 executes a command conversion process. In this process, the control unit 20 receives the common command indicating a display control request from the first terminal device 15A. The control unit 20 identifies the display device 34 connected to the relay device 12 as a peripheral device 30 of a category corresponding to the display control request based on the peripheral device identifier registered in the storage unit 21.

The control unit 20 converts the common command indicating the display control request into a unique command indicating the display control request corresponding to the peripheral device identifier of the display device 34 based on the peripheral device identifier of the display device 34 connected to the relay device 12. The control unit 20 outputs the converted unique command to the display device 34 connected to the relay device 12.

In step S71, the display device 34 executes a display control request acquisition process. In this process, the display device 34 receives the unique command indicating the display control request. Accordingly, the display device 34 acquires the unique command indicating the display control request.

In step S72, the display device 34 executes a control permission transmission process. In this process, the display device 34 outputs a unique command indicating control permission to the relay device 12. The control permission is data indicating that control is permitted.

In the relay device 12, in step S106, the control unit 20 executes a command conversion process. In this process, the control unit 20 receives the unique command indicating control permission from the display device 34.

The control unit 20 converts the unique command indicating control permission into a common command indicating control permission based on the peripheral device identifier of the display device 34 connected to the relay device 12. The control unit 20 transmits the converted common command to the first terminal device 15A that has transmitted the display control request.

In step S47, the first terminal device 15A executes a control permission reception process. In this process, the first terminal device 15A receives the common command indicating control permission from the relay device 12. Accordingly, the first terminal device 15A can recognize that the display device 34 can be controlled.

In step S48, the first terminal device 15A executes a subtotal display control request transmission process. In this process, the first terminal device 15A transmits a common command indicating a subtotal display control request to the relay device 12. The subtotal display control request is a request for displaying subtotal information on the display device 34 connected to the relay device 12. The subtotal information may include a subtotal amount of commodities read by the reading device 35.

In the relay device 12, in step S107, the control unit 20 executes a command conversion process. In this process, the control unit 20 receives the common command indicating the subtotal display control request from the first terminal device 15A. The control unit 20 identifies the display device 34 connected to the relay device 12 as a peripheral device 30 of a category corresponding to the subtotal display control request based on the peripheral device identifier registered in the storage unit 21.

The control unit 20 converts the common command indicating the subtotal display control request into a unique command indicating the subtotal display control request corresponding to the peripheral device identifier of the display device 34 based on the peripheral device identifier of the display device 34 connected to the relay device 12. The control unit 20 outputs the converted unique command to the display device 34 connected to the relay device 12.

In step S73, the display device 34 executes a subtotal display control request acquisition process. In this process, the display device 34 receives the unique command indicating the subtotal display control request. Accordingly, the display device 34 acquires the unique command indicating the subtotal display control request.

In step S74, the display device 34 executes a subtotal display control process. In this process, the display device 34 displays the subtotal information based on the unique command indicating the subtotal display control request.

In step S75, the display device 34 executes a control completion notification process. In this process, the display device 34 outputs a unique command indicating a control completion notification to the relay device 12. The control completion notification is a notification indicating that the control according to the display control request is completed.

In the relay device 12, in step S108, the control unit 20 executes a command conversion process. In this process, the control unit 20 receives the unique command indicating the control completion notification from the display device 34.

The control unit 20 converts the unique command indicating the control completion notification into a common command indicating the control completion notification based on the peripheral device identifier of the display device 34 connected to the relay device 12. The control unit 20 transmits the converted common command to the first terminal device 15A that has transmitted the subtotal display control request.

In step S109, the control unit 20 executes a control flag release process. In this process, the control unit 20 releases the control flag assigned to the storage unit 21. Accordingly, the control unit 20 validates control requests from any of the terminal devices 15.

In step S49, the first terminal device 15A executes a control completion notification reception process. In this process, the first terminal device 15A receives the common command indicating the control completion notification from the relay device 12. Accordingly, the first terminal device 15A can recognize that the control of the display device 34 is completed.

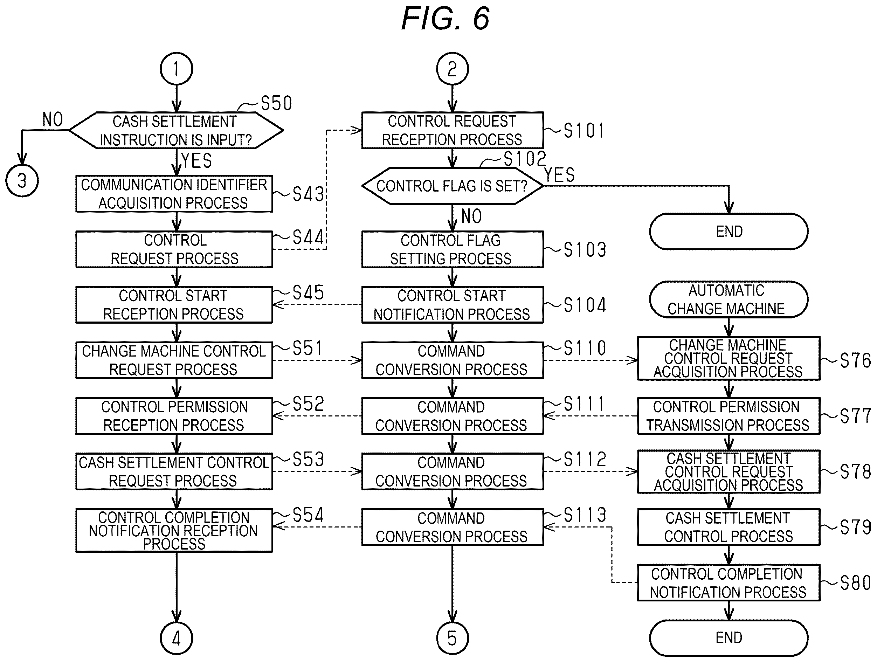

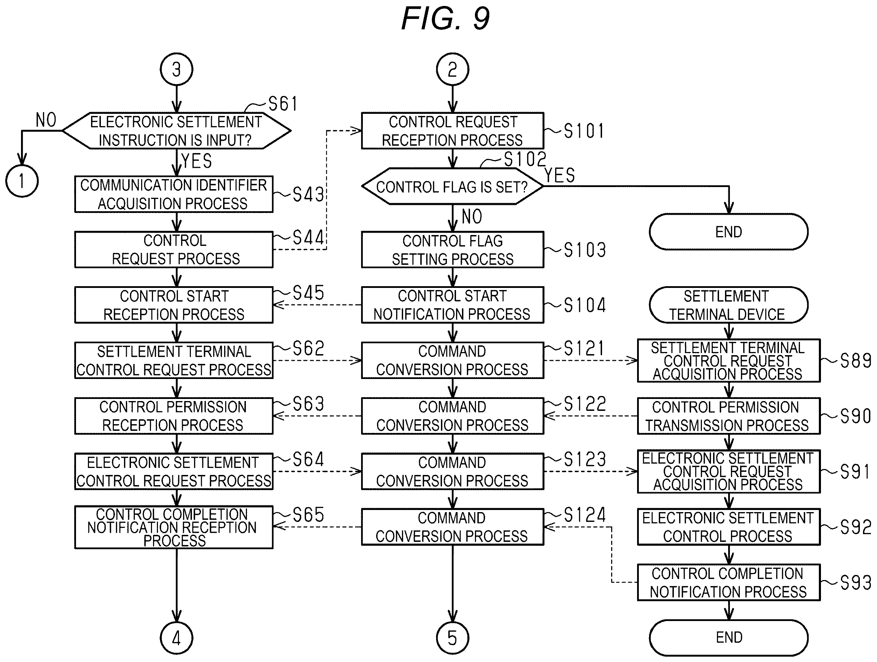

As illustrated in FIG. 6, in step S50, the first terminal device 15A determines whether a cash settlement instruction is input by the operator. If it is determined that no cash settlement instruction is input, the first terminal device 15A proceeds to step S63 in FIG. 9. If it is determined that a cash settlement instruction is input, the first terminal device 15A executes step S43 to step S45. Similarly, in the relay device 12, the control unit 20 executes steps S101 to S104.

When step S45 ends, in step S51, the first terminal device 15A executes a change machine control request process. In this process, the first terminal device 15A transmits a common command indicating a change machine control request to the relay device 12. The change machine control request is a request for controlling the automatic change machine 31 connected to the relay device 12.

In the relay device 12, in step S110, the control unit 20 executes a command conversion process. In this process, the control unit 20 receives the common command indicating the change machine control request from the first terminal device 15A. The control unit 20 identifies the automatic change machine 31 connected to the relay device 12 as a peripheral device 30 of a category corresponding to the change machine control request based on the peripheral device identifier registered in the storage unit 21.

The control unit 20 converts the common command indicating the change machine control request into a unique command indicating the change machine control request corresponding to the peripheral device identifier of the automatic change machine 31 based on the peripheral device identifier of the automatic change machine 31 connected to the relay device 12. The control unit 20 outputs the converted unique command to the automatic change machine 31 connected to the relay device 12.

In step S76, the automatic change machine 31 executes a change machine control request acquisition process. In this process, the automatic change machine 31 receives the unique command indicating the change machine control request. Accordingly, the automatic change machine 31 acquires the unique command indicating the change machine control request.

In step S77, the automatic change machine 31 executes a control permission transmission process. In this process, the automatic change machine 31 outputs a unique command indicating control permission to the relay device 12.

In the relay device 12, in step S111, the control unit 20 executes a command conversion process. In this process, the control unit 20 receives the unique command indicating control permission from the automatic change machine 31.

The control unit 20 converts the unique command indicating control permission into a common command indicating control permission based on the peripheral device identifier of the automatic change machine 31 connected to the relay device 12. The control unit 20 transmits the converted common command to the first terminal device 15A that has transmitted the change machine control request.

In step S52, the first terminal device 15A executes a control permission reception process. In this process, the first terminal device 15A receives the common command indicating control permission from the relay device 12. Accordingly, the first terminal device 15A can recognize that the automatic change machine 31 can be controlled.

In step S53, the first terminal device 15A executes a cash settlement control request transmission process. In this process, the first terminal device 15A transmits a common command indicating a cash settlement control request to the relay device 12. The cash settlement control request is a request for causing the automatic change machine 31 connected to the relay device 12 to perform cash settlement. The cash settlement control request may include a subtotal amount for cash settlement.

In the relay device 12, in step S112, the control unit 20 executes a command conversion process. In this process, the control unit 20 receives the common command indicating the cash settlement control request from the first terminal device 15A. The control unit 20 identifies the automatic change machine 31 connected to the relay device 12 as a peripheral device 30 of a category corresponding to the cash settlement control request based on the peripheral device identifier registered in the storage unit 21.

The control unit 20 converts the common command indicating the cash settlement control request into a unique command indicating the cash settlement control request corresponding to the peripheral device identifier of the automatic change machine 31 based on the peripheral device identifier of the automatic change machine 31 connected to the relay device 12. The control unit 20 outputs the converted unique command to the automatic change machine 31 connected to the relay device 12.

In step S78, the automatic change machine 31 executes a cash settlement control request acquisition process. In this process, the automatic change machine 31 receives the unique command indicating the cash settlement control request. Accordingly, the automatic change machine 31 acquires the unique command indicating the cash settlement control request.

In step S79, the automatic change machine 31 executes a cash settlement control process. In this process, the automatic change machine 31 performs cash settlement based on a unique command indicating the cash settlement control request.

Specifically, the automatic change machine 31 performs control to accept the insertion of cash. When cash is inserted, the automatic change machine 31 outputs a unique command indicating the inserted amount to the relay device 12. The control unit 20 receives the unique command indicating the amount of inserted cash from the automatic change machine 31. The control unit 20 converts the unique command indicating the amount of inserted cash into a common command indicating the amount of inserted cash based on the peripheral device identifier of the automatic change machine 31 connected to the relay device 12. The control unit 20 transmits the converted common command to the first terminal device 15A that has transmitted the cash settlement control request.

Upon receiving the common command indicating the amount of inserted cash, the first terminal device 15A calculates the change based on the difference between the subtotal amount and the amount of inserted cash. The first terminal device 15A transmits a common command indicating the amount of change to the relay device 12. The control unit 20 receives the common command indicating the amount of change from the first terminal device 15A. The control unit 20 converts the common command indicating the amount of change into a unique command indicating the amount of change corresponding to the peripheral device identifier of the automatic change machine 31 based on the peripheral device identifier of the automatic change machine 31 connected to the relay device 12. The control unit 20 outputs the converted unique command to the automatic change machine 31 connected to the relay device 12. Upon receiving the unique command indicating the amount of change from the relay device 12, the automatic change machine 31 discharges cash of an amount corresponding to the change. As described above, if change occurs, the automatic change machine 31 discharges cash of an amount corresponding to the change.

In step S80, the automatic change machine 31 executes a control completion notification process. In this process, the automatic change machine 31 outputs a unique command indicating a control completion notification to the relay device 12.

In the relay device 12, in step S108, the control unit 20 executes a command conversion process. In this process, the control unit 20 receives the unique command indicating the control completion notification from the automatic change machine 31.

The control unit 20 converts the unique command indicating the control completion notification into a common command indicating the control completion notification based on the peripheral device identifier of the automatic change machine 31 connected to the relay device 12. The control unit 20 transmits the converted common command to the first terminal device 15A that has transmitted the cash settlement control request.

In step S54, the first terminal device 15A executes a control completion notification reception process. In this process, the first terminal device 15A receives the common command indicating the control completion notification from the relay device 12. Accordingly, the first terminal device 15A can recognize that the control of the automatic change machine 31 is completed.

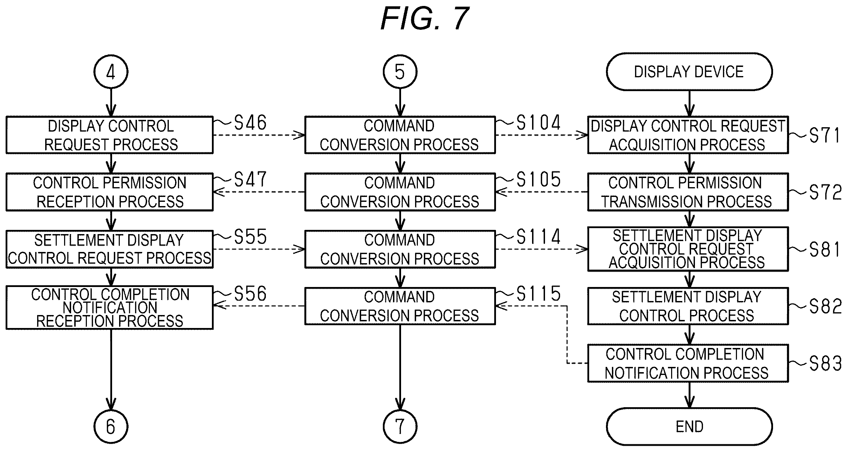

As illustrated in FIG. 7, when step S54 ends, the first terminal device 15A executes steps S46 and S47. In the relay device 12, the control unit 20 executes steps S104 and S105. The display device 34 executes steps S71 and S72.

When step S47 ends, in step S55, the first terminal device 15A executes a settlement display control request transmission process. In this process, the first terminal device 15A transmits a common command indicating a settlement display control request to the relay device 12. The settlement display control request is a request for displaying settlement information on the display device 34 connected to the relay device 12. The settlement information may include settlement content. The settlement information may include a subtotal amount and a payment amount. In the case of cash settlement, the settlement information may include the amount of change. As will be described in detail later, in the case of electronic settlement by the settlement terminal device 32, the settlement information may include the settlement content of the electronic settlement.

In the relay device 12, in step S114, the control unit 20 executes a command conversion process. In this process, the control unit 20 receives the common command indicating the settlement display control request from the first terminal device 15A. The control unit 20 identifies the display device 34 connected to the relay device 12 as a peripheral device 30 of a category corresponding to the settlement display control request based on the peripheral device identifier registered in the storage unit 21.

The control unit 20 converts the common command indicating the settlement display control request into a unique command indicating the settlement display control request corresponding to the peripheral device identifier of the display device 34 based on the peripheral device identifier of the display device 34 connected to the relay device 12. The control unit 20 outputs the converted unique command to the display device 34 connected to the relay device 12.

In step S81, the display device 34 executes a settlement display control request acquisition process. In this process, the display device 34 receives the unique command indicating the settlement display control request. Accordingly, the display device 34 acquires the unique command indicating the settlement display control request.

In step S82, the display device 34 executes a settlement display control process. In this process, the display device 34 displays the settlement information based on the unique command indicating the settlement display control request.

In step S83, the display device 34 executes a control completion notification process. In this process, the display device 34 outputs a unique command indicating a control completion notification to the relay device 12. The control completion notification is a notification indicating that the control according to the display control request is completed.

In the relay device 12, in step S115, the control unit 20 executes a command conversion process. In this process, the control unit 20 receives the unique command indicating the control completion notification from the display device 34.

The control unit 20 converts the unique command indicating the control completion notification into a common command indicating the control completion notification based on the peripheral device identifier of the display device 34 connected to the relay device 12. The control unit 20 transmits the converted common command to the first terminal device 15A that has transmitted the settlement display control request.

In step S56, the first terminal device 15A executes a control completion notification reception process. In this process, the first terminal device 15A receives the common command indicating the control completion notification from the relay device 12. Accordingly, the first terminal device 15A can recognize that the control of the display device 34 is completed.

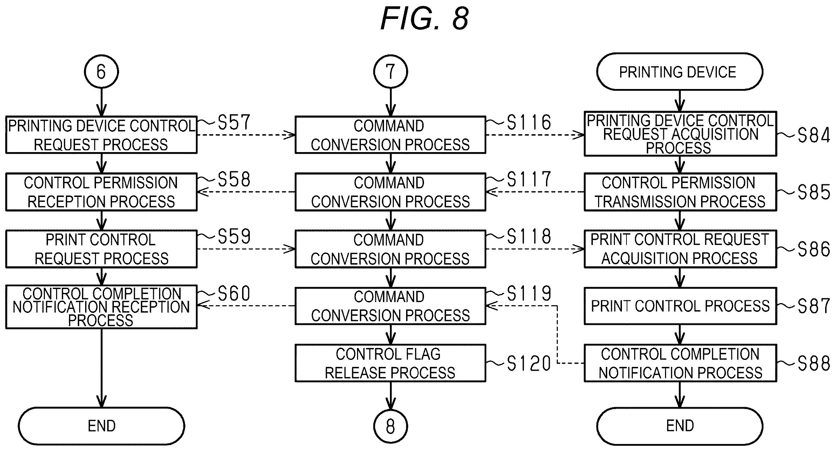

As illustrated in FIG. 8, in step S57, the first terminal device 15A executes a printing device control request process. In this process, the first terminal device 15A transmits a common command indicating a printing device control request to the relay device 12. The printing device control request is a request for controlling the printing device 33 connected to the relay device 12.

In the relay device 12, in step S116, the control unit 20 executes a command conversion process. In this process, the control unit 20 receives the common command indicating the printing device control request from the first terminal device 15A. The control unit 20 identifies the printing device 33 connected to the relay device 12 as a peripheral device 30 of a category corresponding to the printing device control request based on the peripheral device identifier registered in the storage unit 21.

The control unit 20 converts the common command indicating the printing device control request into a unique command indicating the printing device control request corresponding to the peripheral device identifier of the printing device 33 based on the peripheral device identifier of the printing device 33 connected to the relay device 12. The control unit 20 outputs the converted unique command to the printing device 33 connected to the relay device 12.

In step S84, the printing device 33 executes a printing device control request acquisition process. In this process, the printing device 33 receives the unique command indicating the printing device control request. As a result, the printing device 33 acquires the unique command indicating the printing device control request.

In step S85, the printing device 33 executes a control permission transmission process. In this process, the printing device 33 outputs a unique command indicating control permission to the relay device 12.

In the relay device 12, in step S117, the control unit 20 executes a command conversion process. In this process, the control unit 20 receives the unique command indicating control permission from the printing device 33.

The control unit 20 converts the unique command indicating control permission into a common command indicating control permission based on the peripheral device identifier of the printing device 33 connected to the relay device 12. The control unit 20 transmits the converted common command to the first terminal device 15A that has transmitted the printing device control request.

In step S58, the first terminal device 15A executes a control permission reception process. In this process, the first terminal device 15A receives the common command indicating control permission from the relay device 12. Accordingly, the first terminal device 15A can recognize that the printing device 33 can be controlled.

In step S59, the first terminal device 15A executes a print control request transmission process. In this process, the first terminal device 15A transmits a common command indicating a print control request to the relay device 12. The print control request is a request for causing the printing device 33 connected to the relay device 12 to print the settlement information.

In the relay device 12, in step S118, the control unit 20 executes a command conversion process. In this process, the control unit 20 receives the common command indicating the print control request from the first terminal device 15A. The control unit 20 identifies the printing device 33 connected to the relay device 12 as a peripheral device 30 of a category corresponding to the print control request based on the peripheral device identifier registered in the storage unit 21.

The control unit 20 converts the common command indicating the print control request into a unique command indicating the print control request corresponding to the peripheral device identifier of the printing device 33 based on the peripheral device identifier of the printing device 33 connected to the relay device 12. The control unit 20 outputs the converted unique command to the printing device 33 connected to the relay device 12.

In step S86, the printing device 33 executes a print control request acquisition process. In this process, the printing device 33 receives the unique command indicating the print control request. Accordingly, the printing device 33 acquires the unique command indicating the print control request.

In step S87, the printing device 33 executes a print control process. In this process, the printing device 33 prints the settlement information based on the unique command indicating the print control request.

In step S88, the printing device 33 executes a control completion notification process. In this process, the printing device 33 outputs a unique command indicating a control completion notification to the relay device 12. The control completion notification is a notification indicating that the control according to the print control request is completed.

In the relay device 12, in step S119, the control unit 20 executes a command conversion process. In this process, the control unit 20 receives the unique command indicating the control completion notification from the printing device 33.

The control unit 20 converts the unique command indicating the control completion notification into a common command indicating the control completion notification based on the peripheral device identifier of the printing device 33 connected to the relay device 12. The control unit 20 transmits the converted common command to the first terminal device 15A that has transmitted the print control request.

In step S120, the control unit 20 executes a control flag release process. In this process, the control unit 20 releases the control flag assigned to the storage unit 21. Accordingly, the control unit 20 validates control requests from any of the terminal devices 15.

In step S60, the first terminal device 15A executes a control completion notification reception process. In this process, the first terminal device 15A receives the common command indicating the control completion notification from the relay device 12. As a result, the first terminal device 15A can recognize that the control of the printing device 33 is completed.

As illustrated in FIG. 9, in step S61, the first terminal device 15A determines whether an electronic settlement instruction is input by the operator. If it is determined that no electronic settlement instruction is input, the first terminal device 15A proceeds to step S50 in FIG. 6. If it is determined that an electronic settlement instruction is input, the first terminal device 15A executes step S43 to step S45. Similarly, in the relay device 12, the control unit 20 executes steps S101 to S104.

When step S45 ends, in step S62, the first terminal device 15A executes a settlement terminal control request process. In this process, the first terminal device 15A transmits a common command indicating a settlement terminal control request to the relay device 12. The settlement terminal control request is a request for controlling the settlement terminal device 32 connected to the relay device 12.

In the relay device 12, in step S121, the control unit 20 executes a command conversion process. In this process, the control unit 20 receives the common command indicating the settlement terminal control request from the first terminal device 15A. The control unit 20 identifies the settlement terminal device 32 connected to the relay device 12 as a peripheral device 30 of a category corresponding to the settlement terminal control request based on the peripheral device identifier registered in the storage unit 21.

The control unit 20 converts the common command indicating the settlement terminal control request into a unique command indicating the settlement terminal control request corresponding to the peripheral device identifier of the settlement terminal device 32 based on the peripheral device identifier of the settlement terminal device 32 connected to the relay device 12. The control unit 20 outputs the converted unique command to the settlement terminal device 32 connected to the relay device 12.

In step S89, the settlement terminal device 32 executes a settlement terminal control request acquisition process. In this process, settlement terminal device 32 receives the unique command indicating the settlement terminal control request. Accordingly, settlement terminal device 32 acquires the unique command indicating the settlement terminal control request.

In step S90, the settlement terminal device 32 executes a control permission transmission process. In this process, settlement terminal device 32 outputs a unique command indicating control permission to the relay device 12.

In the relay device 12, in step S122, the control unit 20 executes a command conversion process. In this process, the control unit 20 receives the unique command indicating control permission from the settlement terminal device 32.

The control unit 20 converts the unique command indicating control permission into a common command indicating control permission based on the peripheral device identifier of settlement terminal device 32 connected to the relay device 12. The control unit 20 transmits the converted common command to the first terminal device 15A that has transmitted the settlement terminal control request.

In step S63, the first terminal device 15A executes a control permission reception process. In this process, the first terminal device 15A receives the common command indicating control permission from the relay device 12. Accordingly, the first terminal device 15A can recognize that the settlement terminal device 32 can be controlled.

In step S64, the first terminal device 15A executes an electronic settlement control request transmission process. In this process, the first terminal device 15A transmits a common command indicating an electronic settlement control request to the relay device 12. The electronic settlement control request is a request for causing the settlement terminal device 32 connected to the relay device 12 to perform settlement. The electronic settlement control request may include a subtotal amount for electronic settlement. The electronic settlement control request may include a settlement method of the electronic settlement.

In the relay device 12, in step S123, the control unit 20 executes a command conversion process. In this process, the control unit 20 receives the common command indicating the electronic settlement control request from the first terminal device 15A. The control unit 20 identifies the settlement terminal device 32 connected to the relay device 12 as a peripheral device 30 of a category corresponding to the electronic settlement control request based on the peripheral device identifier registered in the storage unit 21.

The control unit 20 converts the common command indicating the electronic settlement control request into a unique command indicating the electronic settlement control request corresponding to the peripheral device identifier of the settlement terminal device 32 based on the peripheral device identifier of the settlement terminal device 32 connected to the relay device 12. The control unit 20 outputs the converted unique command to the settlement terminal device 32 connected to the relay device 12.

In step S91, the settlement terminal device 32 executes an electronic settlement control request acquisition process. In this process, settlement terminal device 32 receives the unique command indicating the electronic settlement control request. Accordingly, settlement terminal device 32 acquires the unique command indicating the electronic settlement control request.

In step S92, the settlement terminal device 32 executes an electronic settlement control process. In this process, the settlement terminal device 32 performs electronic settlement based on a unique command indicating the electronic settlement control request.

Specifically, settlement terminal device 32 acquires data related to the electronic settlement. The settlement terminal device 32 may acquire data related to a credit card as the data related to the electronic settlement. The settlement terminal device 32 may acquire a personal identification number set in a credit card as the data related to the electronic settlement. The personal identification number may be a personal identification number (PIN) code. The settlement terminal device 32 may acquire data related to a settlement method as the data related to the electronic settlement.

The settlement terminal device 32 performs the electronic settlement based on the data related to the electronic settlement. The settlement terminal device 32 performs the electronic settlement based on the data related to the electronic settlement through communication with a settlement server (not illustrated).

In step S93, the settlement terminal device 32 executes a control completion notification process. In this process, settlement terminal device 32 outputs a unique command indicating the control completion notification to relay device 12.

In the relay device 12, in step S124, the control unit 20 executes a command conversion process. In this process, the control unit 20 receives the unique command indicating the control completion notification from the settlement terminal device 32.

The control unit 20 converts the unique command indicating the control completion notification into a common command indicating the control completion notification based on the peripheral device identifier of the settlement terminal device 32 connected to the relay device 12. The control unit 20 transmits the converted common command to the first terminal device 15A that has transmitted the electronic settlement control request.

In step S65, the first terminal device 15A executes a control completion notification reception process. In this process, the first terminal device 15A receives the common command indicating the control completion notification from the relay device 12. Accordingly, the first terminal device 15A can recognize that the control of the settlement terminal device 32 is completed. When step S54 ends, the first terminal device 15A proceeds to step S46 in FIG. 7.

As described above, upon receiving a control request to the peripheral device 30 from the first terminal device 15A, the control unit 20 can control the peripheral device 30 with the first terminal device 15A as a control entity. Specifically, upon receiving a control request to the peripheral device 30 from the first terminal device 15A after control according to the control request from the second terminal device 15B is completed, the control unit 20 can control the peripheral device 30 with the first terminal device 15A as a control entity.

Upon receiving a control request from the first terminal device 15A after receiving the control request from the second terminal device 15B and before the control according to the control request is completed, the control unit 20 restricts the control of the peripheral device 30 with the first terminal device 15A as a control entity.

Upon receiving a common command common to the first terminal device 15A and the second terminal device 15B, the control unit 20 converts the common command into a unique command corresponding to the peripheral device 30. In particular, when receiving the common command, the control unit 20 converts the common command into a unique command corresponding to the type of the connected peripheral device 30 among the plurality of peripheral devices 30 having different unique commands. The control unit 20 outputs the converted unique command to the peripheral device 30.

Upon receiving the unique command corresponding to the peripheral device 30 from the peripheral device 30, the control unit 20 converts the unique command into a common command. The control unit 20 transmits the converted common command to the first terminal device 15A.

Upon receiving a control request to the peripheral device 30 from the first terminal device 15A, the control unit 20 can control the peripheral device 30 with the first terminal device 15A as a control entity, regardless of the operating system and the application of the first terminal device 15A.

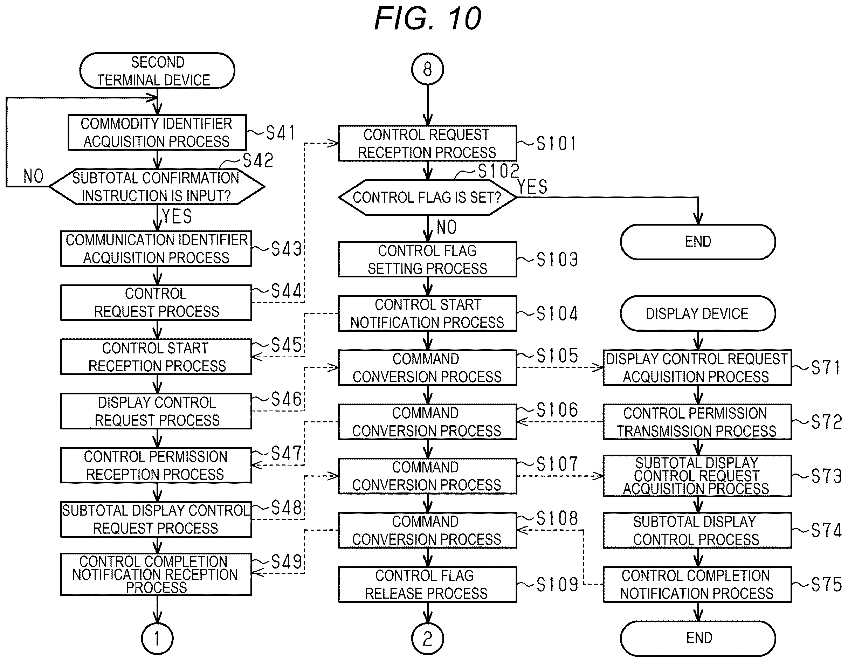

As illustrated in FIG. 10, in step S41, the second terminal device 15B executes the commodity identifier acquisition process in the same manner as the first terminal device 15A. In step S42, the second terminal device 15B determines whether a subtotal confirmation instruction is input by the operator in the same manner as the first terminal device 15A. If it is determined that no subtotal confirmation instruction is input, the second terminal device 15B proceeds to step S41. If the second terminal device 15B determines that a subtotal confirmation instruction is input, the process proceeds to step S43.

In step S43, the second terminal device 15B executes the communication identifier acquisition process in the same manner as the first terminal device 15A. Accordingly, the second terminal device 15B acquires the communication identifier by receiving the beacon identifier from the transmission unit 23 by wireless communication. The second terminal device 15B may acquire the communication identifier by wireless communication with the near field communication tag 24. In step S44, the second terminal device 15B executes the control request process in the same manner as the first terminal device 15A.

In the relay device 12, in step S101, the control unit 20 executes a control request reception process. In this process, the control unit 20 receives the control request from the second terminal device 15B. Accordingly, the control unit 20 acquires the control request from the second terminal device 15B.

In step S102, the control unit 20 determines whether a control flag is set. If it is determined that a control flag is set, the control unit 20 ends the accounting control process. Accordingly, the control request from the second terminal device 15B is invalidated. That is, the control of peripheral device 30 in response to the control request from the second terminal device 15B is restricted. If it is determined that no control flag is set, the control unit 20 proceeds to step S103.

In step S103, the control unit 20 executes a control flag setting process. In this process, the control unit 20 sets a control flag. Accordingly, the control unit 20 invalidates control requests from the terminal devices 15 other than the second terminal device 15B.

As described above, upon receiving a control request to the peripheral device 30 from the second terminal device 15B, the control unit 20 can control the peripheral device 30 with the second terminal device 15B as a control entity. Specifically, upon receiving a control request to the peripheral device 30 from the second terminal device 15B after control according to the control request from the first terminal device 15A is completed, the control unit 20 can control the peripheral device 30 with the second terminal device 15B as a control entity.

Upon receiving a control request from the second terminal device 15B after receiving the control request from the first terminal device 15A and before the control according to the control request is completed, the control unit 20 restricts the control of the peripheral device 30 with the second terminal device 15B as a control entity.

Upon receiving a control request to the peripheral device 30 from the second terminal device 15B, the control unit 20 can control the peripheral device 30 with the second terminal device 15B as a control entity, regardless of the operating system and the application of the second terminal device 15B.

In particular, upon receiving a control request to the peripheral device 30 from the second terminal device 15B, even after the control according to the subtotal display control request from the first terminal device 15A is completed, the control unit 20 can control the peripheral device 30 with the second terminal device 15B as a control entity.

The accounting process may include a reading process, a subtotal display process, a cash settlement process, an electronic settlement process, a settlement display process, and a printing process. The reading process is a process of reading the commodity identifier. The reading process may include a commodity identifier acquisition process.

Specifically, the accounting process may include a subtotal display process according to the subtotal confirmation instruction. The accounting process may include a cash settlement process according to the cash settlement instruction, a settlement display process, and a printing process. The accounting process may include an electronic settlement process according to the electronic settlement instruction, a settlement display process, and a printing process. In the accounting process, after the subtotal display process is executed, a cash settlement process, an electronic settlement process, a settlement display process, and a printing process are executed.

The subtotal display process corresponds to an example of a first accounting process. The control request based on the subtotal confirmation instruction corresponds to an example of a first control request. The control related to the first accounting process corresponds to an example of a first control. At least any one of the cash settlement process, the electronic settlement process, the settlement display process, and the printing process corresponds to an example of a second accounting process. The control request based on the cash settlement instruction or the electronic settlement instruction corresponds to an example of a second control request. The control related to the second accounting process corresponds to an example of a second control.

The accounting process includes the first accounting process and the second accounting process. The second accounting process is performed after the first accounting process. The control request includes the first control request related to the first accounting process and the second control request related to the second accounting process. The second control is executed after the first control.

As described above, upon receiving a control request from the second terminal device 15B after the first control is completed in response to the first control request from the first terminal device 15A and before receiving the second control request, the control unit 20 can control the second terminal device 15B as a control entity.

### Operation and Effects of First Embodiment

Operations and effects of the first embodiment will be described.
(1-1) Upon receiving a control request to the peripheral device 30 from the first terminal device 15A, the control unit 20 can control the peripheral device 30 with the first terminal device 15A as a control entity. Upon receiving a control request to the peripheral device 30 from the second terminal device 15B after the control according to the control request to the peripheral device 30 from the first terminal device 15A is completed, the control unit 20 can control the peripheral device 30 with the second terminal device 15B as a control entity. According to this configuration, the control entity of the peripheral device 30 connected to the relay device 12 can be switched in response to the control request from the first terminal device 15A and the control request from the second terminal device 15B. This can cause the peripheral device 30 to perform the accounting process using the plurality of terminal devices 15. The convenience related to the accounting process can therefore be improved.
(1-2) The peripheral device 30 includes the automatic change machine 31, the settlement terminal device 32, the printing device 33, and the display device 34. According to this configuration, it is possible to cause the automatic change machine 31, the settlement terminal device 32, the printing device 33, and the display device 34 to perform the process related to the accounting process using the plurality of terminal devices 15. The convenience related to the accounting process can therefore be improved.
(1-3) Upon receiving a control request to the peripheral device 30 from the second terminal device 15B before the control according to the control request to the peripheral device 30 from the first terminal device 15A is completed, the control unit 20 restricts the control of the peripheral device 30 with the second terminal device 15B as a control entity. According to this configuration, the control entity of the peripheral device 30 connected to the relay device 12 can be controlled exclusively in response to the control request from the first terminal device 15A and the control request from the second terminal device 15B. This can cause the peripheral device 30 to perform the accounting process using the plurality of terminal devices 15. The convenience related to the accounting process can therefore be improved.
(1-4) Upon receiving a control request from the second terminal device 15B after the control according to the first control request from the first terminal device 15A is completed and before receiving the second control request, the control unit 20 can control the peripheral device 30 with the second terminal device 15B as a control entity. According to this configuration, even during the accounting process by the first terminal device 15A, the peripheral device 30 can be controlled with the second terminal device 15B as a control entity as long as after the control according to the first control request is completed and before receiving the second control request. The convenience related to the accounting process can therefore be improved.
(1-5) Upon receiving a common command common to the first terminal device 15A and the second terminal device 15B, the control unit 20 converts the common command into a unique command corresponding to the peripheral device 30. According to this configuration, a common command common to the first terminal device 15A and the second terminal device 15B can be converted into a unique command corresponding to the peripheral device 30 connected to the relay device 12. Accordingly, the control request for the peripheral device 30 can be performed even if the first terminal device 15A and the second terminal device 15B have not recognized the peripheral device 30 connected to the relay device 12. In addition, it is possible to increase the degree of freedom in selecting the peripheral device 30 to be connected to the relay device 12. The convenience related to the accounting process can therefore be improved.
(1-6) Upon receiving the common command, the control unit 20 converts the common command into a unique command corresponding to the type of the connected peripheral device 30 among the plurality of peripheral devices 30 having different unique commands. According to this configuration, the control request for the peripheral device 30 can be performed even if the first terminal device 15A and the second terminal device 15B have not recognized the type of the peripheral device 30 connected to the relay device 12. Therefore, the first terminal device 15A and the second terminal device 15B can control the peripheral device 30 even if the type of the peripheral device 30 connected to the relay device 12 is changed. The convenience related to the accounting process can therefore be improved.
(1-7) Upon receiving a control request to the peripheral device 30 from the first terminal device 15A, the control unit 20 can control the peripheral device 30 with the first terminal device 15A as a control entity, regardless of the operating system and the application of the first terminal device 15A. Upon receiving a control request to the peripheral device 30 from the second terminal device 15B, the control unit 20 can control the peripheral device 30 with the second terminal device 15B as a control entity, regardless of the operating system and the application of the second terminal device 15B. According to this configuration, the first terminal device 15A and the second terminal device 15B can control the peripheral device 30 connected to the relay device 12 without changing the operating system and the application. The first terminal device 15A and the second terminal device 15B may not be installed with a plurality of applications and may not activate a plurality of applications corresponding to the peripheral device 30. Without depending on the operating system and the application of the terminal device 15, the degree of freedom in selecting the peripheral device 30 that can be connected to the relay device 12 can be increased as well. The convenience related to the accounting process can therefore be improved.
(1-8) The relay device 12 can communicate with the first terminal device 15A and the second terminal device 15B via wireless communication. According to this configuration, it is possible to make a control request for the peripheral device 30 connected to the relay device 12 even if the first terminal device 15A and the second terminal device 15B are not connected to the relay device 12 by wire. Accordingly, the portability of the first terminal device 15A and the second terminal device 15B can be improved. The convenience related to the accounting process can therefore be improved.

### Second Embodiment

Next, a second embodiment will be described. In the following explanation, redundant description is omitted or simplified for the same components as the components in the embodiment described above, and components different from the components in the embodiment described above are described.

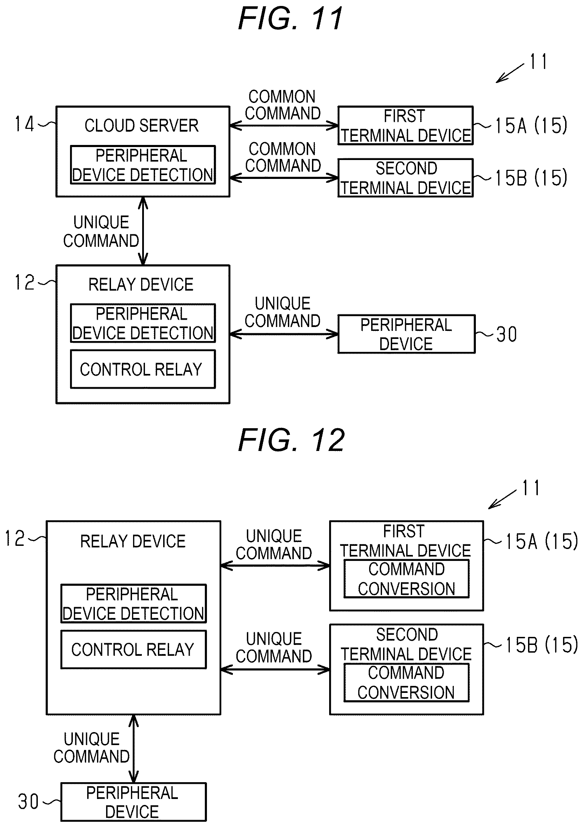

As illustrated in FIG. 11, in the second embodiment, the cloud server 14 may have a data conversion function. In this case, the terminal device 15 transmits the common command to the cloud server 14. The cloud server 14 may store a conversion table.

The cloud server 14 receives the common command from the terminal device 15. The common command may include data for specifying the type of the peripheral device 30 as the communication target. The cloud server 14 specifies the type of the peripheral device 30 as the communication target based on the common command from the terminal device 15. The cloud server 14 converts the common command from the terminal device 15 into a unique command corresponding to the peripheral device 30. The unique command may include data for specifying the type of the peripheral device 30 as the communication target.

The cloud server 14 transmits the unique command to the relay device 12. In the relay device 12, the control unit 20 transmits the unique command from the cloud server 14 to the peripheral device 30 as the communication target.

The peripheral device 30 transmits the unique command to the relay device 12. The relay device 12 transmits the unique command from the peripheral device 30 to the cloud server 14. The cloud server 14 receives the unique command from the relay device 12. The cloud server 14 specifies the type of the peripheral device 30 as the communication target based on the unique command from the relay device 12. The cloud server 14 converts the unique command from the peripheral device 30 into a common command. The cloud server 14 transmits the common command to the terminal device 15. The cloud server 14 can thus centrally manage the command conversion.

### Third Embodiment

Next, a third embodiment will be described.

As illustrated in FIG. 12, in the third embodiment, the terminal device 15 may have a data conversion function. The terminal device 15 may store a conversion table. In such a case, the terminal device 15 specifies the type of the peripheral device 30 as the communication target. The terminal device 15 converts the common command into a unique command corresponding to the peripheral device 30. The terminal device 15 transmits the unique command corresponding to the peripheral device 30 to the relay device 12. In the relay device 12, the control unit 20 transmits the unique command from the terminal device 15 to the peripheral device 30 as the communication target.

The peripheral device 30 transmits the unique command to the relay device 12. The relay device 12 transmits the unique command from the peripheral device 30 to the terminal device 15. The terminal device 15 converts the unique command from the relay device 12 into a common command. In this way, the command conversion is directly performed by the terminal device 15.

### Fourth Embodiment

Next, a fourth embodiment will be described.

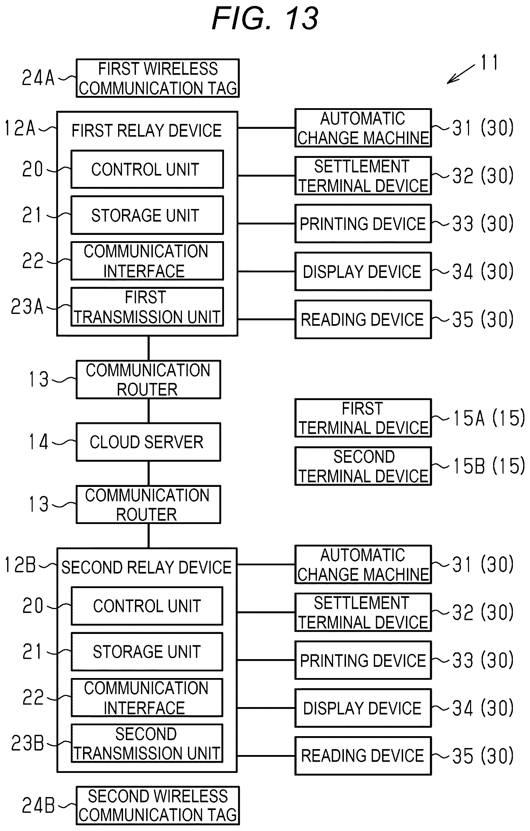

As illustrated in FIG. 13, in the fourth embodiment, the POS system 11 may include a plurality of relay devices 12. The POS system 11 may include a first relay device 12A and a second relay device 12B.

The first relay device 12A and the second relay device 12B have the same configuration as the relay device 12 in the first embodiment. That is, the first relay device 12A can communicate with the first terminal device 15A and the second terminal device 15B. The second relay device 12B can communicate with the first terminal device 15A and the second terminal device 15B.

The first relay device 12A includes a first transmission unit 23A. The first transmission unit 23A transmits a first communication identifier that enables communication with the first relay device 12A. The first relay device 12A may be connected to the reading device 35 as the peripheral device 30.

The second relay device 12B includes a second transmission unit 23B. The second transmission unit 23B transmits a second communication identifier that enables communication with the second relay device 12B. The second relay device 12B may be connected to the reading device 35 as the peripheral device 30.

The POS system 11 may include a first near field communication tag 24A and a second near field communication tag 24B. The first near field communication tag 24A may be included in the first relay device 12A, may be incorporated in the first relay device 12A, or may be attached to the exterior of the first relay device 12A. The first near field communication tag 24A may be disposed near the first relay device 12A.

The second near field communication tag 24B may be included in the second relay device 12B, may be incorporated in the second relay device 12B, or may be attached to the exterior of the second relay device 12B. The second near field communication tag 24B may be disposed near the second relay device 12B.

### Accounting Control Process

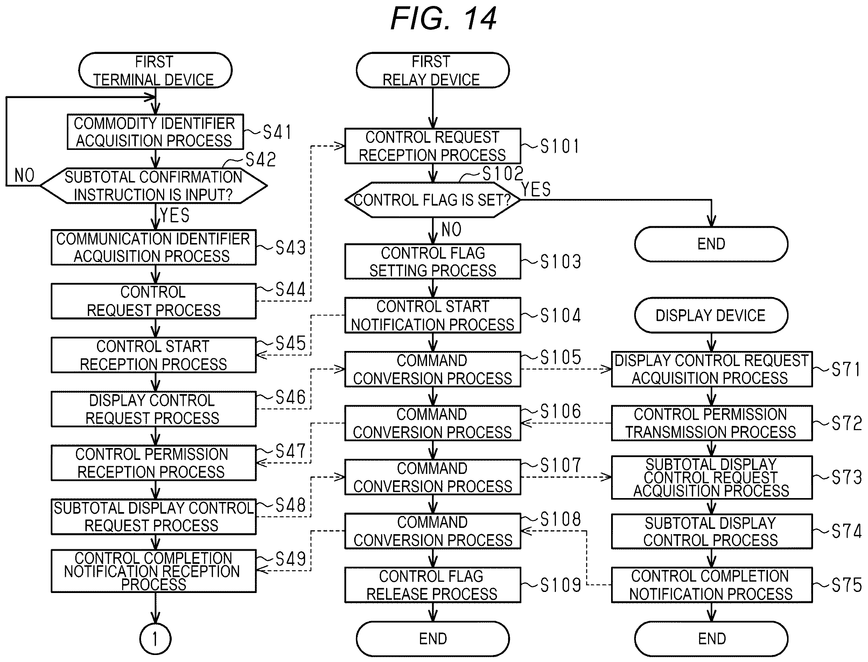

As illustrated in FIG. 14, in step S43, the first terminal device 15A acquires the first communication identifier by receiving the beacon identifier from the first transmission unit 23A of the first relay device 12A by wireless communication. The first terminal device 15A may acquire the first communication identifier by wireless communication with the first near field communication tag 24A. The first communication identifier is an identifier corresponding to the first relay device 12A. In step S44, the first terminal device 15A transmits a control request to the first relay device 12A as the communication target.

In the first relay device 12A, in step S101, the control unit 20 executes a control request reception process. In this process, the control unit 20 receives the control request from the first terminal device 15A. Accordingly, the control unit 20 acquires the control request from the first terminal device 15A.

In step S102, the control unit 20 determines whether a control flag is set. If it is determined that no control flag is set, the control unit 20 executes steps S103 and S104.

In step S45, the first terminal device 15A executes a control start notification reception process. In this process, the first terminal device 15A receives the control start notification from the first relay device 12A. Accordingly, the first terminal device 15A can recognize that the control according to the control request can be started.

In this way, the first terminal device 15A acquires the first communication identifier from the first transmission unit 23A. The first terminal device 15A may acquire the first communication identifier by communication with the first near field communication tag 24A. The first terminal device 15A communicates with the first relay device 12A based on the first communication identifier.

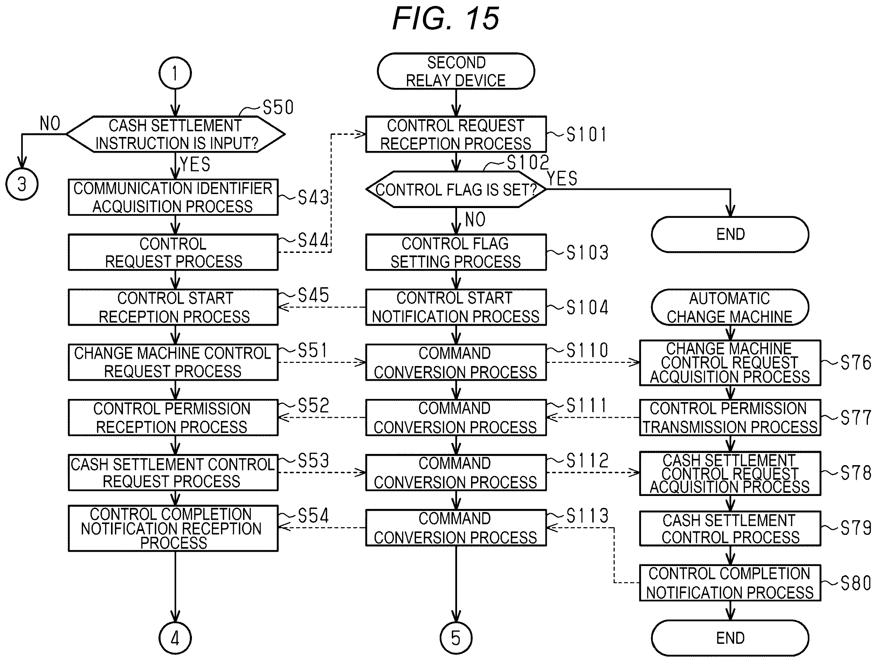

As illustrated in FIG. 15, in step S43, the first terminal device 15A acquires the second communication identifier by receiving the beacon identifier from the second transmission unit 23B of the second relay device 12B by wireless communication. The first terminal device 15A may acquire the second communication identifier by wireless communication with the second near field communication tag 24B. The second communication identifier is an identifier corresponding to the second relay device 12B. In step S44, the first terminal device 15A transmits a control request to the second relay device 12B as the communication target.

In the second relay device 12B, in step S101, the control unit 20 executes a control request reception process. In this process, the control unit 20 receives the control request from the first terminal device 15A. Accordingly, the control unit 20 acquires the control request from the first terminal device 15A.

In step S102, the control unit 20 determines whether a control flag is set. If it is determined that no control flag is set, the control unit 20 executes steps S103 and S104.

In step S45, the first terminal device 15A executes a control start notification reception process. In this process, the first terminal device 15A receives the control start notification from the second relay device 12B. Accordingly, the first terminal device 15A can recognize that the control according to the control request can be started.

In this way, the first terminal device 15A acquires the second communication identifier from the second transmission unit 23B. The first terminal device 15A may acquire the second communication identifier by communication with the second near field communication tag 24B. The first terminal device 15A communicates with the second relay device 12B based on the second communication identifier.

The second terminal device 15B can be controlled in the same manner as the first terminal device 15A. The second terminal device 15B acquires the first communication identifier from the first transmission unit 23A. The second terminal device 15B may acquire the first communication identifier by communication with the first near field communication tag 24A. The second terminal device 15B communicates with the first relay device 12A based on the first communication identifier.

The second terminal device 15B acquires the second communication identifier from the second transmission unit 23B. The second terminal device 15B may acquire the second communication identifier by communication with the second near field communication tag 24B. The second terminal device 15B communicates with the second relay device 12B based on the second communication identifier.

### Operation and Effects of Fourth Embodiment

Operations and effects of the fourth embodiment will be described.
(4-1) The first relay device 12A and the second relay device 12B can communicate with the first terminal device 15A and the second terminal device 15B, respectively. According to this configuration, each of the first terminal device 15A and the second terminal device 15B can control both the peripheral device 30 connected to the first relay device 12A and the peripheral device 30 connected to the second relay device 12B. Accordingly, each of the first terminal device 15A and the second terminal device 15B can switch the control target between the peripheral device 30 connected to the first relay device 12A and the peripheral device 30 connected to the second relay device 12B. For example, if the position of the first relay device 12A and the position of the second relay device 12B are away from each other in the store, both the first relay device 12A and the second relay device 12B can cause the peripheral device 30 to perform the accounting process. The convenience related to the accounting process can therefore be improved.
(4-2) Each of the first terminal device 15A and the second terminal device 15B communicates with the first relay device 12A based on the first communication identifier acquired by communication with the first near field communication tag 24A. Each of the first terminal device 15A and the second terminal device 15B communicates with the second relay device 12B based on the second communication identifier acquired by communication with the second near field communication tag 24B. According to this configuration, each of the first terminal device 15A and the second terminal device 15B can switch the control target between the peripheral device 30 connected to the first relay device 12A and the peripheral device 30 connected to the second relay device 12B. The convenience related to the accounting process can therefore be improved.
(4-3) Each of the first terminal device 15A and the second terminal device 15B communicates with the first relay device 12A based on the first communication identifier acquired from the first transmission unit 23A. Each of the first terminal device 15A and the second terminal device 15B communicates with the second relay device 12B based on the second communication identifier acquired from the second transmission unit 23B. According to this configuration, each of the first terminal device 15A and the second terminal device 15B can switch the control target between the peripheral device 30 connected to the first relay device 12A and the peripheral device 30 connected to the second relay device 12B. The convenience related to the accounting process can therefore be improved.

### Modification

The present embodiment may be modified as follows. The embodiment and the following modifications can be implemented in combination with each other as long as no technical inconsistencies are involved.

The POS system 11 may include three or more relay devices 12. The POS system 11 may include one or three or more terminal devices 15. That is, the POS system 11 may include M relay devices 12 and N terminal devices 15. The peripheral device 30 may be controlled by communication between the M relay devices 12 and the N terminal devices 15. M may be a natural number. N may be a natural number.

In the fourth embodiment, the POS system 11 may include one or three or more communication routers 13. The first relay device 12A and the second relay device 12B may be capable of communicating with a plurality of terminal devices 15 via one communication router 13. The first relay device 12A and the second relay device 12B may be capable of communicating with the cloud server 14 via one communication router 13.

The control unit 20 may store the connection history of the peripheral device 30 in the storage unit 21. In such a case, the control unit 20 may identify the peripheral device 30 connected to the relay device 12 based on the connection history of the peripheral device 30. The control unit 20 may communicate with the peripheral device 30 connected to the relay device 12 based on the connection history of the peripheral device 30.

The control unit 20 may download the conversion table from the cloud server 14 to store the conversion table in the storage unit 21. The control unit 20 may download the conversion table from a management server (not illustrated) other than the cloud server 14 to store the conversion table in the storage unit 21. The management server may manage the conversion table.

Upon receiving any control request from the second terminal device 15B after the first control is completed in response to the first control request from the first terminal device 15A and before receiving the second control request, the control unit 20 may be capable of controlling the second terminal device 15B as a control entity.

Upon receiving any control request from the second terminal device 15B after the control of the peripheral device 30 is completed in response to the control request from the first terminal device 15A, the control unit 20 can control the second terminal device 15B as a control entity.

The terminal device 15 may display the subtotal information on the display device 34 every time the commodity identifier is acquired. In this case, the terminal device 15 may execute steps S43 to S45 in FIG. 5 before the subtotal confirmation instruction is input, and may execute steps S46 to S49 in FIG. 5 each time the commodity identifier is acquired.

If the reading device 35 is connected to the relay device 12 as the peripheral device 30, the terminal device 15 may display the subtotal information on the display device 34 every time the commodity identifier is acquired from the reading device 35. In this case, the terminal device 15 may execute steps S43 to S45 in FIG. 5 before the subtotal confirmation instruction is input, and may execute steps S46 to S49 in FIG. 5 each time the commodity identifier is acquired.

The control unit 20 may cancel the control flag when any control according to the control request for the peripheral device 30 is completed. For example, the control unit 20 may cancel the control flag when the control according to the cash settlement control request is completed. For example, the control unit 20 may cancel the control flag when the control according to the electronic settlement control request is completed. For example, the control unit 20 may cancel the control flag when the control according to the settlement display control request is completed.

When a predetermined condition is satisfied, the terminal device 15 may execute steps S43 to S45 in FIG. 5 and transmit a control request for the peripheral device 30 to the relay device 12. For example, before acquiring the commodity identifier, the terminal device 15 may execute steps S43 to S45 in FIG. 5 in response to the reading instruction and transmit a control request for the peripheral device 30 to the relay device 12. For example, the terminal device 15 may execute steps S43 to S45 in FIG. 5 before causing the display device 34 to display the settlement information, and transmit a control request for the peripheral device 30 to the relay device 12. For example, the terminal device 15 may execute steps S43 to S45 in FIG. 5 before controlling the printing device 33, and transmit a control request for the peripheral device 30 to the relay device 12.

The control unit 20 may not cancel the control flag during the accounting process. For example, the control unit 20 may not cancel the control flag when the control according to the subtotal display control request is completed. In this case, the terminal device 15 may not execute steps S43 to S45 in FIG. 5 in response to the cash settlement instruction or the electronic settlement instruction.

The control unit 20 may be capable of controlling some of the peripheral devices 30 connected to the relay device 12 with the terminal device 15 as an entity in response to a control request from the terminal device 15. The control unit 20 may control each category of the peripheral devices 30 connected to the relay device 12 with the terminal device 15 as an entity in response to a control request from the terminal device 15. In such a case, the control unit 20 may control the control entity for each of the plurality of peripheral devices 30.

For example, upon receiving a display control request from the terminal device 15, the control unit 20 may control the display device 34 connected to the relay device 12 with the terminal device 15 as a control entity.

For example, upon receiving a change machine control request from the terminal device 15, the control unit 20 may control the automatic change machine 31 connected to the relay device 12 with the terminal device 15 as a control entity.

For example, upon receiving a settlement terminal control request from the terminal device 15, the control unit 20 may control the settlement terminal device 32 connected to the relay device 12 with the terminal device 15 as a control entity.

For example, upon receiving a printing device control request from the terminal device 15, the control unit 20 may control the printing device 33 connected to the relay device 12 with the terminal device 15 as a control entity.

The first terminal device 15A and the second terminal device 15B may have the same operating system and application. The plurality of terminal devices 15 may have the same operating system and application.

If a control flag is set, upon receiving a control request from the terminal device 15, the control unit 20 prohibits the control of the peripheral device 30 by the terminal device 15, but may postpone the control of the peripheral device 30 by the terminal device 15. If the control flag is canceled, the control unit 20 may start the postponed control of the peripheral device 30 by the terminal device 15.

The relay device 12 may be capable of being connected to at least any one of the plurality of peripheral devices 30 classified into the same category. As a specific example of the settlement terminal device 32, the relay device 12 may be capable of selectively connecting a first settlement terminal device and a second settlement terminal device classified into the same category of the settlement terminal device 32.

If a plurality of peripheral devices 30 of the same category are connected to the relay device 12, the control unit 20 may enable communication with the peripheral device 30 corresponding to the control request from the terminal device 15. For example, if the control unit 20 is connected to both the first settlement terminal device and the second settlement terminal device, the control unit 20 may enable communication with the first settlement terminal device corresponding to the control request for the first settlement terminal device from the terminal device 15.

The accounting process may not include at least any one of the reading process, the subtotal display process, the cash settlement process, the electronic settlement process, the settlement display process, and the printing process. The accounting process may include a process other than the reading process, the subtotal display process, the cash settlement process, the electronic settlement process, the settlement display process, and the printing process. The accounting process may include at least any one of a refund process, a point use process, and a service coupon use process.

The peripheral device 30 may not include at least any one of the automatic change machine 31, the settlement terminal device 32, the printing device 33, the display device 34, and the reading device 35. The peripheral device 30 may include a device other than the automatic change machine 31, the settlement terminal device 32, the printing device 33, the display device 34, and the reading device 35. The peripheral device 30 may include, for example, a rewrite card reader.

The terminal device 15 may not be a portable terminal device. The terminal device 15 may be an unmanned reception terminal device. The terminal device 15 may be a self-service checkout machine. The terminal device 15 may be a portable terminal device carried by a purchaser.

The relay device 12 is partially connected to the terminal device 15 by wireless communication, but may be entirely connected to the terminal device 15 by wireless communication. The relay device 12 may be entirely connected to the terminal device 15 by wired communication. The relay device 12 may be connected to at least any one of the peripheral devices 30 by wireless communication.

The expression "at least any one" used in the present specification means one or more of desired options. For example, the expression "at least any one" used in the present specification refers to only one option or both of two options when the number of options is two. As another example, the expression "at least any one" used in the present specification refers to only one option or a combination of any two or more options when the number of options is three or more.

### Appendix

Technical ideas figured out from the embodiments and the modifications described above and action effects thereof are described below. The technical ideas and the action effects thereof can be combined with each other within a range where no technical contradictions are involved.
[1] A relay device for POS system is a relay device for POS system for being connected to at least one peripheral device related to an accounting process. The relay device includes: a control unit. The control unit is configured to, upon receiving a control request to the peripheral device from a first terminal device configured to accept input related to the accounting process, control the peripheral device with the first terminal device as a control entity. The control unit is configured to, upon receiving a control request to the peripheral device from a second terminal device configured to accept input related to the accounting process after control according to the control request from the first terminal device to the peripheral device is completed, control the peripheral device with the second terminal device as a control entity.
   According to this configuration, the control entity of the peripheral device connected to the relay device can be switched in response to the control request from the first terminal device and the control request from the second terminal device. This can cause the peripheral device to perform the accounting process using the plurality of terminal devices. The convenience related to the accounting process can therefore be improved.
[2] In the relay device for POS system as described above, upon receiving a control request to the peripheral device from the second terminal device after receiving the control request to the peripheral device from the first terminal device and before the control according to the control request to the peripheral device from the first terminal device is completed, the control unit restricts the control of the peripheral device with the second terminal device as a control entity.
   According to this configuration, the exclusive control of the control entity of the peripheral device connected to the relay device can be performed in response to the control request from the first terminal device and the control request from the second terminal device. This can cause the peripheral device to perform the accounting process using the plurality of terminal devices. The convenience related to the accounting process can therefore be improved.
[3] In the relay device for POS system as described above, the accounting process includes a first accounting process and a second accounting process performed after the first accounting process. The control request includes a first control request related to the first accounting process and a second control request related to the second accounting process. Upon receiving a control request to the peripheral device from the second terminal device after the control according to the first control request to the peripheral device from the first terminal device is completed and before receiving the second control request to the peripheral device, the control unit controls the peripheral device with the second terminal device as a control entity.
   According to this configuration, even during the accounting process by the first terminal device, the peripheral device can be controlled with the second terminal device as a control entity as long as after the control according to the first control request is completed and before receiving the second control request. The convenience related to the accounting process can therefore be improved.
[4] In the relay device for POS system as described above, upon receiving a common command common to the first terminal device and the second terminal device, the control unit converts the common command into a unique command corresponding to the peripheral device, and outputs the unique command to the peripheral device.
   According to this configuration, a common command common to the first terminal device and the second terminal device can be converted into a unique command corresponding to the peripheral device connected to the relay device. Accordingly, the control request for the peripheral device can be performed even if the first terminal device and the second terminal device have not recognized the peripheral device connected to the relay device. The convenience related to the accounting process can therefore be improved.
[5] In the relay device for POS system as described above, the relay device is configured to be connected to a plurality of peripheral devices classified into the same category, the plurality of peripheral devices have different unique commands. Upon receiving the common command, the control unit converts the common command to a unique command corresponding to a type of a connected peripheral device among the plurality of peripheral devices.
   According to this configuration, a common command common to the first terminal device and the second terminal device can be converted into a unique command corresponding to the type of the peripheral device connected to the relay device among the plurality of peripheral devices having different unique commands. Accordingly, the control request for the peripheral device can be performed even if the first terminal device and the second terminal device have not recognized the type of the peripheral device connected to the relay device. Therefore, the first terminal device and the second terminal device can control the peripheral device even if the type of the peripheral device connected to the relay device is changed. The convenience related to the accounting process can therefore be improved.
[6] In the relay device for POS system as described above, the control unit is configured to, upon receiving a control request to the peripheral device from the first terminal device, control the peripheral device with the first terminal device as a control entity, regardless of an operating system and an application of the first terminal device. The control unit is configured to, upon receiving a control request to the peripheral device from the second terminal device, control the peripheral device with the second terminal device as a control entity, regardless of an operating system and an application of the second terminal device.
   According to this configuration, the first terminal device and the second terminal device can control the peripheral device connected to the relay device without changing the operating system and the application. In addition, without depending on the operating system and the application of the terminal device, the degree of freedom in selecting the peripheral devices that can be connected to the relay device can be increased as well. The convenience related to the accounting process can therefore be improved.
[7] A POS system includes: at least one peripheral device related to an accounting process; and a relay device. The peripheral device and the relay device are configured to be connected to each other. The relay device is configured to, upon receiving a control request to the peripheral device from a first terminal device configured to accept input related to the accounting process, control the peripheral device with the first terminal device as a control entity. The relay device is configured to, upon receiving a control request to the peripheral device from a second terminal device configured to accept input related to the accounting process after control according to the control request from the first terminal device to the peripheral device is completed, control the peripheral device with the second terminal device as a control entity. According to this configuration, it is possible to achieve the same effect as in [1].
[8] The POS system as described above includes: a second relay device. The relay device is a first relay device. The first relay device and the second relay device are configured to communicate with the first terminal device. The first relay device and the second relay device are configured to communicate with the second terminal device.
   According to this configuration, each of the first terminal device and the second terminal device can control both the peripheral device connected to the first relay device and the peripheral device connected to the second relay device. Accordingly, each of the first terminal device and the second terminal device can switch the control target between the peripheral device connected to the first relay device and the peripheral device connected to the second relay device. The convenience related to the accounting process can therefore be improved.
[9] In the POS system as described above, the first terminal device and the second terminal device acquire a first communication identifier that enables communication with the first relay device by communication with a first near field communication tag, and communicate with the first relay device based on the first communication identifier. The first terminal device and the second terminal device acquire a second communication identifier that enables communication with the second relay device by communication with a second near field communication tag, and communicate with the second relay device based on the second communication identifier.
   According to this configuration, each of the first terminal device and the second terminal device can switch the control target between the peripheral device connected to the first relay device and the peripheral device connected to the second relay device by communication with each near field communication tag. The convenience related to the accounting process can therefore be improved.
[10] In the POS system as described above, the first relay device includes a first transmission unit configured to transmit a first communication identifier that enables communication with the first relay device. The second relay device includes a second transmission unit configured to transmit a second communication identifier that enables communication with the second relay device. The first terminal device and the second terminal device acquire the first communication identifier from the first transmission unit and communicate with the first relay device based on the first communication identifier. The first terminal device and the second terminal device acquire the second communication identifier from the second transmission unit and communicate with the second relay device based on the second communication identifier.
   According to this configuration, each of the first terminal device and the second terminal device can switch the control target between the peripheral device connected to the first relay device and the peripheral device connected to the second relay device by communication with each transmission unit. The convenience related to the accounting process can therefore be improved.
[11] In the POS system as described above, the first terminal device is a portable terminal device. The second terminal device is a portable terminal device, and the relay device is configured to communicate with the first terminal device and the second terminal device via wireless communication.
   According to this configuration, it is possible to make a control request for the peripheral device connected to the relay device even if the first terminal device and the second terminal device are not connected to the relay device by wire. Accordingly, the portability of the first terminal device and the second terminal device can be improved. The convenience related to the accounting process can therefore be improved.
[12] In the POS system as described above, the peripheral device includes a printing device.
   According to this configuration, the control entity of the printing device connected to the relay device can be switched in response to the control request from the first terminal device and the control request from the second terminal device. This can cause the printing device to perform the printing process related to the accounting process using the plurality of terminal devices. The convenience related to the accounting process can therefore be improved.
[13] A control method for POS system is a control method for POS system including: at least one peripheral device related to an accounting process; and a relay device. The peripheral device and the relay device are configured to be connected to each other. The control method for POS system includes, by the relay device: upon receiving a control request to the peripheral device from a first terminal device configured to accept input related to the accounting process, controlling the peripheral device with the first terminal device as a control entity; and upon receiving a control request to the peripheral device from a second terminal device configured to accept input related to the accounting process after control according to the control request from the first terminal device to the peripheral device is completed, controlling the peripheral device with the second terminal device as a control entity. According to this configuration, it is possible to achieve the same effect as in [1].
[14] A program is for causing at least one computer to execute: upon receiving a control request to a peripheral device related to an accounting process from a first terminal device configured to accept input related to the accounting process, controlling the peripheral device with the first terminal device as a control entity; and upon receiving a control request to the peripheral device from a second terminal device configured to accept input related to the accounting process after control according to the control request from the first terminal device to the peripheral device is completed, controlling the peripheral device with the second terminal device as a control entity. According to this configuration, it is possible to achieve the same effect as in [1].

## Claims

1. A relay device for POS system for being connected to at least one peripheral device related to an accounting process, the relay device comprising:
a control unit, wherein
the control unit is configured to, upon receiving a control request to the peripheral device from a first terminal device configured to accept input related to the accounting process, control the peripheral device with the first terminal device as a control entity, and
the control unit is configured to, upon receiving a control request to the peripheral device from a second terminal device configured to accept input related to the accounting process after control according to the control request from the first terminal device to the peripheral device is completed, control the peripheral device with the second terminal device as a control entity.

2. The relay device for POS system according to claim 1, wherein
upon receiving a control request to the peripheral device from the second terminal device after receiving the control request to the peripheral device from the first terminal device and before the control according to the control request to the peripheral device from the first terminal device is completed, the control unit restricts the control of the peripheral device with the second terminal device as a control entity.

3. The relay device for POS system according to claim 2, wherein
the accounting process includes a first accounting process and a second accounting process performed after the first accounting process,
the control request includes a first control request related to the first accounting process and a second control request related to the second accounting process, and
upon receiving a control request to the peripheral device from the second terminal device after the control according to the first control request to the peripheral device from the first terminal device is completed and before receiving the second control request to the peripheral device, the control unit controls the peripheral device with the second terminal device as a control entity.

4. The relay device for POS system according to any one of claims 1 to 3, wherein upon receiving a common command common to the first terminal device and the second terminal device, the control unit
converts the common command into a unique command corresponding to the peripheral device, and
outputs the unique command to the peripheral device.

5. The relay device for POS system according to claim 4, wherein
the relay device is configured to be connected to a plurality of peripheral devices classified into the same category,
the plurality of peripheral devices have different unique commands, and
upon receiving the common command, the control unit converts the common command to a unique command corresponding to a type of a connected peripheral device among the plurality of peripheral devices.

6. The relay device for POS system according to any one of claims 1 to 5, wherein
the control unit is configured to, upon receiving a control request to the peripheral device from the first terminal device, control the peripheral device with the first terminal device as a control entity, regardless of an operating system and an application of the first terminal device, and
the control unit is configured to, upon receiving a control request to the peripheral device from the second terminal device, control the peripheral device with the second terminal device as a control entity, regardless of an operating system and an application of the second terminal device.

7. A POS system comprising: at least one peripheral device related to an accounting process; and a relay device, the peripheral device and the relay device being configured to be connected to each other, wherein
the relay device is configured to, upon receiving a control request to the peripheral device from a first terminal device configured to accept input related to the accounting process, control the peripheral device with the first terminal device as a control entity, and
the relay device is configured to, upon receiving a control request to the peripheral device from a second terminal device configured to accept input related to the accounting process after control according to the control request from the first terminal device to the peripheral device is completed, control the peripheral device with the second terminal device as a control entity.

8. The POS system according to claim 7, comprising:
a second relay device, wherein
the relay device is a first relay device,
the first relay device and the second relay device are configured to communicate with the first terminal device, and
the first relay device and the second relay device are configured to communicate with the second terminal device.

9. The POS system according to claim 8, wherein
the first terminal device and the second terminal device acquire a first communication identifier that enables communication with the first relay device by communication with a first near field communication tag, and communicate with the first relay device based on the first communication identifier, and
the first terminal device and the second terminal device acquire a second communication identifier that enables communication with the second relay device by communication with a second near field communication tag, and communicate with the second relay device based on the second communication identifier.

10. The POS system according to claim 8, wherein
the first relay device includes a first transmission unit configured to transmit a first communication identifier that enables communication with the first relay device,
the second relay device includes a second transmission unit configured to transmit a second communication identifier that enables communication with the second relay device,
the first terminal device and the second terminal device acquire the first communication identifier from the first transmission unit and communicate with the first relay device based on the first communication identifier, and
the first terminal device and the second terminal device acquire the second communication identifier from the second transmission unit and communicate with the second relay device based on the second communication identifier.

11. The POS system according to any one of claims 7 to 10, wherein
the first terminal device is a portable terminal device,
the second terminal device is a portable terminal device, and
the relay device is configured to communicate with the first terminal device and the second terminal device via wireless communication.

12. The POS system according to any one of claims 7 to 11, wherein
the peripheral device includes a printing device.

13. A control method for a POS system including: at least one peripheral device related to an accounting process; and a relay device, the peripheral device and the relay device being configured to be connected to each other, the control method for POS system comprising, by the relay device:
upon receiving a control request to the peripheral device from a first terminal device configured to accept input related to the accounting process, controlling the peripheral device with the first terminal device as a control entity; and
upon receiving a control request to the peripheral device from a second terminal device configured to accept input related to the accounting process after control according to the control request from the first terminal device to the peripheral device is completed, controlling the peripheral device with the second terminal device as a control entity.
